# EUROPÄISCHE PATENTSCHRIFT

(11) **EP 0 400 310 B1**
(45) Veröffentlichungstag und Bekanntmachung des Hinweises auf die Patenterteilung: **21.04.1993**
(21) Anmeldenummer: 90107053.2
(22) Anmeldetag: 12.04.1990
(51) Int. Cl.: G05D 5/02, B29C 47/92, H01B 13/24

(54) **Vorrichtung zur Regelung des Aussendurchmessers eines Stranges, insbesondere eines Kabels**
Device for controlling the external diameter of a cord, especially of a cable
Dispositif pour le réglage d'un diamètre extérieur d'une corde, en particulier un câble

(30) Priorität: 31.05.1989 DE 3917657
(43) Veröffentlichungstag der Anmeldung: 05.12.1990
(60) Teilanmeldung: 92114364.0
(73) Patentinhaber: SIKORA INDUSTRIEELEKTRONIK GMBH, D-28307 Bremen (DE)
(72) Erfinder: Sikora, Harald, D-2800 Bremen (DE); Gwinner, Ulrich, Dipl.-Ing., D-2800 Bremen 41 (DE)
(74) Vertreter: Patentanwälte Hauck, Graalfs, Wehnert, Döring, Siemons

(56) Entgegenhaltungen:
- DD-A- 231 151
- DD-A- 1 567 41
- DE-A- 3 623 679
- DE-B- 2 643 686
- GB-A- 2 145 852

## Beschreibung

Die Erfindung bezieht sich auf eine Vorrichtung zur Regelung des Außendurchmessers eines Stranges, insbesondere eines Kabels oder dergleichen nach dem Oberbegriff des Patentanspruchs 1.

Kabel werden üblicherweise in der Form hergestellt, daß der Leiter durch einen extruder gezogen wird, der auf den Leiter eine Isolationsschicht aufbringt, die aus einem zur Vulkanisation oder Trockenvernetzung geeigneten Material besteht. Nach dem Extrudieren wird das Kabel oder der Strang durch eine Vulkanisations- oder Trockenvernetzungsstrecke geleitet und anschließend gekühlt. Zum Beispiel aus Gründen der Isolationsfestigkeit muß der aufextrudierte Mantel eine Mindestdicke aufweisen. Andererseits wird aus Materialersparnis- aber auch aus Gewichtsgründen der Durchmesser des Mantels nur so groß gewählt wie erforderlich. Daher ist es notwendig, den Durchmesser des Kabels oder Stranges ständig zu überwachen und eine entsprechende Regelung vorzunehmen, sollte er einen vorgegebenen Wert unter- oder überschreiten.

Aus Gründen einer schnellen Regelung wird vorgezogen, den Warmdurchmesser direkt hinter dem Extruder zu messen. Die Messung des Kaltdurchmessers hinter der Kühlstrecke kann einige Sekunden bis Minuten betragen, je nach Anlage und Liniengeschwindigkeit. Dadurch wird jedoch die Totzeit der Regelung negativ beeinflußt. Im Stand der Technik wird der Warmdurchmesser meist durch einen ebenfalls empirisch ermittelten Schrumpfungsfaktor modifiziert, um ihn in einen Kaltdurchmesser umzurechnen, was durch die Verwendung von Mikroprozessoren in Prozeßsteueranlagen problemlos zu bewerkstelligen ist. Allerdings ist bei diesem Verfahren notwendig, den nicht in die Regelung einbezogenen wirklichen Kaltwert von Zeit zu Zeit zu überprüfen. Aus der GB-A-2 145 852 ist eine Vorrichtung bekanntgeworden, bei der zum Beginn einer Kühlstrecke eine erste Durchmesservorrichtung und am Ende der Kühlstrecke eine zweite Durchmesservorrichtung vorgesehen sind. Das Durchmessersignal der zweiten Meßvorrichtung wird mit einem Sollwert verglichen. Ein Summierglied erhält den Sollwert sowie die Differenz aus dem Sollwert und dem Istwert und einen Schrumpfungswert. Das Ausgangssignal des Summierglieds wird auf eine weitere Vergleichsvorrichtung gegeben, die das Durchmessersignal der ersten Meßvorrichtung erhält.Das Ausgangssignal der Vergleichsvorrichtung wird auf einen Regler gegeben. Auf diese Weise wird zwar der Kaltdurchmesser des in der Kühlstrecke abgekühlten Kabels berücksichtigt, jedoch stammen die in der Vergleichsvorrichtung verglichenen Warm- und Kaltdurchmesser von verschiedenen Kabelstellen. Durchmesseränderungen können sich dadurch unmittelbar als Störung auf die Regelung auswirken und stehen einer schnellen Regelung entgegen. Der Schrumpfungswert wird bei der bekannten Vorrichtung vorgegeben und nicht gemessen und dient als eigentlicher Sollwert der Regelung.

Der Erfindung liegt die Aufgabe zugrunde, eine Vorrichtung zu schaffen, mit der auf einfache und unaufwendige Weise der Durchmesser eines Kabels oder eines Stranges präzise auf vorgegebene Werte geregelt werden kann, unabhängig von dem jeweils gewünschten Solldurchmesser.

Bei der Erfindung ist ebenfalls eine erste Durchmessermeßvorrichtung kurz hinter dem Extruder (Warmwert) und eine zweite Durchmessermeßvorrichtung im Abstand zum Extruder angeordnet, vorzugsweise hinter der Kühlstrecke (Kaltwert). Das Durchmessersignal der ersten Meßvorrichtung wird zum einen auf eine erste Vergleichsvorrichtung und zum anderen auf eine Verzögerungsstufe gegeben, deren Verzögerungszeit genau der Zeit entspricht, die der Strang zwischen der ersten und zweiten Durchmessermeßvorrichtung zurücklegt. Eine zweite Vergleichsvorrichtung vergleicht das Durchmessermeßsignal der zweiten Meßvorrichtung mit dem ersten Durchmessersignal und das Differenzsignal der zweiten Vergleichsvorrichtung wird ebenfalls - wie außerdem der Kaltsollwert - auf die erste Vergleichsvorrichtung gegeben. Die Verzögerungsstufe kann nach einer Ausgestaltung der Erfindung von einem FIFO-Datenspeicher oder Schieberegister gebildet werden, dessen Schiebefrequenz von der Abzugsgeschwindigkeit abhängig ist.

Bei der Erfindung wird aufgrund der Verzögerung die tatsächliche Schrumpfung des Kabels gemessen. Die hierbei erhaltenen Werte für die Schrumpfung sind in etwa konstant, werden also durch Durchmesserschwankungen nur unwesentlich verändert und beeinflussen die Regelung deshalb - obwohl sie um die Laufzeit verzögert zur Verfügung stehen - auch nicht negativ. Die Vorteile einer sogenannten Warmertregelung, nämlich schnelles Reagieren und Ausregeln von Störungen, bleiben damit erhalten. Sobald vom zweiten Durchmessermeßgerät Kaltwerte zur Verfügung stehen, kann sofort auf den richtigen Endwert geregelt werden. Die beim Hochfahren einer Linie vor dem Aktivieren der Regelung produzierte Länge ist häufig schon ausreichend, zum Beispiel das Schieberegister zu füllen und damit die Schrumpfung zu ermitteln, so daß verzögerungsfrei beim Einschalten der Regelung auf den richtigen Wert geregelt werden kann.

Die Erfindung wird nachfolgend anhand eines Ausführungsbeispiels näher beschrieben.

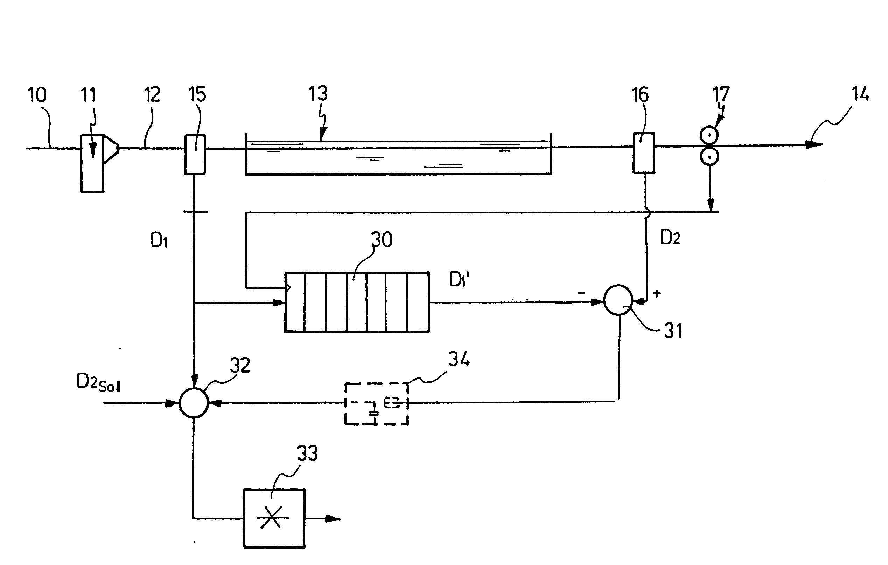

Die einzige Figur zeigt ein Blockschaltbild einer Regelungsvorrichtung nach der Erfindung.

In der Zeichnung wird ein Leiter 10 einem Extruder 11 zugeführt, der den Leiter 10 mit Kunststoffmaterial ummantelt zur Bildung eines Kabels 12. Das Kabel 12 wird durch eine Kühlvorrichtung 13 hindurchgeführt und in Richtung des Pfeils 14 abgezogen und von einer nicht gezeigten Aufwickelvorrichtung aufgewickelt, die eine vorgegebene Abzugsgeschwindigkeit für das Kabel 12 erzeugt. Eine erste Durchmessermeßvorrichtung 15 mißt den Außendurchmesser des Kabels relativ unmittelbar im Anschluß an den Extruder 11. Eine zweite Durchmessermeßvorrichtung 16 mißt den Durchmesser des Kabels 12 hinter der Strecke 13. Die gemessenen Durchmesserwerte sind nicht gleich, da der Kunststoff beim Abkühlen schrumpft. Eine Längenmeßvorrichtung 17 erzeugt Impulse in Abhängigkeit von der produzierten Länge des Kabels 12.

Die Schrumpfung, die der Außendurchmesser zwischen dem Warm- und dem Kaltzustand erfährt, wird durch die beiden Meßvorrichtungen 15, 16 tatsächlich ermittelt, und zwar jeweils für identische Kabelabschnitte. Zu diesem Zweck ist ein FIFO-Datenspeicher oder Schieberegister 30 vorgesehen, in das der Warmdurchmesserwert D₁ eingegeben und in dem er im Takt des Vorschubs des Kabels 12 durch das Schieberegister 30 bewegt wird. Der am Ausgang des Schieberegisters 30 austretende Durchmesserwert D₁ wird in einer Vergleichsvorrichtung 31 mit dem Kaltdurchmesserwert D₂ verglichen. Das Differenzsignal wird auf die Vergleichsvorrichtung 32 gegeben, in die der Warmdurchmesser D₁ und der Solldurchmesser D_{2 soll} gegeben werden zur Ermittlung einer Abweichung, die dem Regler 33 zugeführt wird. Der Regler 33 kann Integralverhalten zeigen. Das in der Vergleichsvorrichtung 31 ermittelte Differenzsignal kann ggf. in einer Mittelwertstufe 34 zu einem Mittelwert gebildet werden, um gewisse Schwankungen im Durchmesser, die durch eine Unrundheit des Kabels verursacht sein können, auszugleichen.

## Patentansprüche

1. Vorrichtung zur Regelung des Außendurchmessers eines Stranges, insbesondere eines Kabels oder dergleichen, mit einer ersten Durchmessermeßvorrichtung (15) hinter dem Extruder (11) zur Messung des Warmdurchmessers (D1) des aus einem Extruder (11) austretenden Stranges (12) aus Kunststoff, einer zweiten Durchmessermeßvorrichtung (16) im Abstand zum Extruder (11), vorzugsweise hinter der Kühlstrecke (13) für den Strang (12) zur Messung des Kaltdurchmessers (D2) des Stranges (12), einer ersten Vergeichsvorrichtung (32), die einen Sollwert (D2_{Soll}) mit dem Durchmessersignal der ersten Durchmessermeßvorrichtung (15) vergleicht, einer mit dem Durchmessersignal der ersten Durchmessermeßvorrichtung (15) beaufschlagten Verzögerungsstufe (30), deren Verzögerungszeit der Zeit entspricht, die der Strang (12) zwischen der ersten und zweiten Durchmessermeßvorrichtung (15, 16) zurücklegt, einer zweiten Vergleichsvorrichtung (31), die das Durchmessersignal der zweiten Durchmessermeßvorrichtung (16) mit dem verzögerten ersten Durchmessersignal (D₁')der Verzögerungsstufe (30) vergleicht, wobei das Differenzsignal der zweiten Vergleichsvorrichtung (31) ebenfalls auf die erste Vergleichsvorrichtung (32) gegeben wird.

2. Vorrichtung nach Anspruch 1, dadurch gekennzeichnet, daß die Verzögerungsstufe (30) ein FIFO-Datenspeicher oder ein Schieberegister ist und der FIFO-Datenspeicher oder das Schieberegister Längenimpulse von einer Längenmeßvorrichtung (17) für den Strang (12) erhält.

3. Vorrichtung nach Anspruch 1 oder 2, dadurch gekennzeichnet, daß eine Mittelwertstufe (34) vorgesehen ist, die aus dem Differenzsignal der zweiten Vergleichsvorrichtung (31) einen Mittelwert bildet.

## Claims

1. A device for controlling the external diameter of a cord, in particular of a cable or the like, comprising a first diameter measuring device (15) downstream of the extruder (11) for measuring the warm diameter (D₁) of the cord (11) made of plastic material emerging from an extruder (11), a second diameter measuring device (16) located at a distance from the extruder (11) preferably downstream of the cooling path (13) for the cord (12) for measuring the cold diameter (D₂) of the cord (12), a first comparator (32) comparing a desired value (D₂ desired) and the diameter signal of the first diameter measuring device (15), a delay stage (30) to which the diameter signal of the first diameter measuring device (15) is delivered, the delay time of the delay stage corresponding to the time period which the cord (12) needs to pass from the first to the second diameter measuring device (15, 16), a second comparator (31) comparing the diameter signal of the second diameter measuring device (16) and the delayed first diameter signal (D₁') of the delay stage (30), wherein the difference signal of the second comparator (31) is also delivered to the first comparator (32).

2. The device of claim 1, wherein the delay means (30) is a FIFO date memory or a shift register and the FIFO date memory or the shift register, respectively, receiving length-responsive pulses from a length measuring device (17) for the strand (12).

3. The device of claim 1 or 2, wherein a mean value stage (34) is provided forming a mean value from the difference signal of the second comparator (31).

## Revendications

1. Dispositif pour réguler le diamètre extérieur d'un cordon, en particulier d'un câble, ou similaire, comportant un premier dispositif (15) de mesure du diamètre, placé derrière l'extrudeuse (11), pour mesurer le diamètre à chaud (D1) du cordon (12) en matière plastique sortant d'une extrudeuse (11), un deuxième dispositif (16) de mesure du diamètre, placé à une certaine distance de l'extrudeuse (11), de préférence derrière la ligne de refroidissement (13) du cordon (12), pour mesurer le diamètre à froid (D2) du cordon (12), un premier dispositif de comparaison (32) qui compare une valeur de consigne (D2soll) avec le signal de diamètre émis par le premier dispositif (15) de mesure du diamètre, un étage retardateur (30), alimenté par le signal de diamètre émis par le premier dispositif (15) de mesure du diamètre, dont le temps de retard correspond au temps mis par le cordon (12) pour parcourir la distance entre le premier et le deuxième dispositif de mesure du diamètre (15, 16), un deuxième dispositif de comparaison (31), qui compare le signal de diamètre émis par le deuxième dispositif (16) de mesure du diamètre avec le signal de diamètre retardé (D1') émis par l'étage retardateur (30), le signal différentiel du deuxième dispositif de comparaison (31) étant transmis, de même, au premier dispositif de comparaison (32).

2. Dispositif suivant la revendication 1, caractérisé en ce que l'étage retardateur (30) est une mémoire de données FIFO (premier entré, premier sorti) ou un registre à décalage, et en ce que la mémoire de données FIFO, ou le registre à décalage, reçoit des impulsions représentatives de longueurs provenant d'un dispositif de mesure des longueurs (17) du cordon (12).

3. Dispositif suivant la revendication 1 ou la revendication 2, caractérisé en ce qu'il est prévu un étage d'établissement de valeur moyenne (34), qui, à partir du signal différentiel du deuxième dispositif de comparaison (31), fournit une valeur moyenne.
